Europäisches Patentamt

European Patent Office

Office européen des brevets

(19)

(11) Veröffentlichungsnummer: **0 537 447 B1**

## (12) EUROPÄISCHE PATENTSCHRIFT

(45) Veröffentlichungstag der Patentschrift: **24.05.95**

(51) Int. Cl.6: **B27K 3/50**, B27K 3/38, B27K 3/40

(21) Anmeldenummer: **92114296.4**

(22) Anmeldetag: **21.08.92**

(54) **Wässriges Holzschutzmittel.**

(30) Priorität: **09.10.91 DE 4133389**

(43) Veröffentlichungstag der Anmeldung:
**21.04.93 Patentblatt 93/16**

(45) Bekanntmachung des Hinweises auf die
Patenterteilung:
**24.05.95 Patentblatt 95/21**

(84) Benannte Vertragsstaaten:
**AT BE CH DE DK ES FR GB GR IE IT LI LU MC
NL PT SE**

(56) Entgegenhaltungen:
**EP-A- 0 038 932
EP-A- 0 218 024
EP-A- 0 413 909
WO-A-86/07525**

(73) Patentinhaber: **DESOWAG GmbH
Rossstrasse 76
D-40476 Düsseldorf (DE)**

(72) Erfinder: **Hellwig, Volker, Dr.
Thiergartenstrasse 15
W-4150 Krefeld 1 (DE)**
Erfinder: **Hiller, Johannes Christian, Dr.
Vinhoverweg 50
W-4044 Kaarst 2 (DE)**

(74) Vertreter: **Sparing - Röhl - Henseler Patentanwälte
Postfach 14 04 43
D-40074 Düsseldorf (DE)**

EP 0 537 447 B1

**Beschreibung**

Die vorliegende Erfindung betrifft ein Mittel oder Konzentrat zur Bekämpfung von Holzschädlingen in befallenem Holz auf der Basis wäßriger, pyrethroidhaltiger Zusammensetzungen.

Die Wirksamkeit von Bekämpfungsmitteln wird nach der DIN-Vorschrift EN 22 "Bestimmung der bekämpfenden Wirkung gegenüber Larven von Hylotrupes bajulus" ermittelt. Die Nummer 7.3 dieser Norm nennt als Prüfdauer für Holzschutzmittel mit schneller Wirkung 12 Wochen, für Holzschutzmittel mit langsamer Wirkung 24 Wochen. Die RAL-Prüfbedingungen schreiben eine Abtötungsrate von mindestens 80 % vor, bei EHC (Europäisches Homologations-Kommitee) 85 %.

Aus der DE-OS 3613548 sind Holzschutzmittel, insbesondere gegen holzzerstörende Insekten bekannt, die mindestens einen Wirkstoff aus der Gruppe der Pyrethroide und weiterhin einen Aryloxyalkanol mit bis zu 6 Kohlenstoffatomen im Alkanolrest enthalten. Es handelt sich hierbei gemäß den Beispielen infolge Verwendung von aromatischen und aliphatischen Kohlenwasserstoffen als Lösungsmittel bzw. Verdünnungsmittel um sogenannte ölige Bekämpfungsmittel. Derartige Mittel erfüllen zwar die RAL-Prüfbedingungen in 12 Wochen, weisen jedoch während der Abtrocknungszeit nach der Verarbeitung eine Geruchsbelästigung durch das verdunstende Lösungsmittel bzw. Verdünnungsmittel sowie ein erhöhtes Brandrisiko auf.

Aus der DE-OS 3531257 ist ein Mittel oder ein Konzentrat zum Konservieren von Holz und Holzwerkstoffen bekannt, das mindestens ein Pyrethroid und ein Gemisch, bestehend auf mindestens einem Bindemittel und mindestens einem Verdünnungsmittel und einem Emulgator oder Netzmittel, enthält. Bei der Mitverwendung von Wasser werden stabile Emulsionen erhalten. Die Abtötungsrate pyrethroidhaltiger Holzschutzmittelemulsionen liegt nach 12 Wochen bei 30 bis 60 %; sie erreichen erst nach 24 Wochen Prüfzeit Abtötungsraten in der Größenordnung von 80 %. Die sehr langsame Wirkung üblicher Holzschutzmittelemulsionen ist für den gewerblichen Verarbeiter nicht akzeptabel, da noch sehr lange nach dem Abschluß der Bekämpfungsmaßnahmen Fraßspuren auftreten können.

Aus der EP-PS 0149051 ist eine wasserlösliche pestizide Formulierung aus mindestens einem Pyrethroid, einem Gemisch von aromatischen Kohlenwasserstoffen, einem Gemisch von anionischen und nichtionischen Emulgatoren sowie Wasser bekannt. Diese Formulierung hat den Nachteil, daß sie auf Grund des Gehaltes an anionischem Emulgator keine ausreichende Eindringung im Holz aufweist.

Aufgabe der vorliegenden Erfindung war es daher, ein Mittel oder Konzentrat zur Bekämpfung von Holzschädlingen auf der Basis wäßriger pyrethroidhaltiger Zusammensetzungen zur Verfügung zu stellen, das einen möglichst geringen Gehalt an schwerflüchtigen Kohlenwasserstoffen aufweist, trotz hohem Wassergehalt in Form einer klaren, stabilen Emulsion vorliegt und gleichzeitig ein verbessertes Eindringvermögen aufweist.

Erfindungsgemäß wurde festgestellt, daß diese Aufgabe dadurch gelöst werden kann, daß das erfindungsgemäße Mittel zur Bekämpfung von Holzschädlingen in befallenem Holz aus

0,05 bis 2 Gew.-Teilen, vorzugsweise
0,1 bis 0,8 Gew.-Teilen
eines oder mehrerer Pyrethroide,
1,5 bis 5 Gew.-Teilen, vorzugsweise
2,5 bis 3,5 Gew.-Teilen
eines aromatenfreien Lösungsmittels,
1,5 bis 5 Gew.-Teilen, vorzugsweise
2,5 bis 3,5 Gew.-Teilen
Butyldiglykol und
2,5 bis 5 Gew.-Teilen, vorzugsweise
3 bis 4 Gew.-Teilen
eines oder mehrerer nichtionischen Emulgatoren aus der Gruppe Alkylphenolpolyethylenglykolether,
Carbonsäurepolyethylenglykolester,
Alkylpolyglykolether,
Alkylarylpolyglykolether und
Alkylolamid,
sowie
94,45 bis 83 Gew.-Teilen, vorzugsweise
91,90 bis 88,2 Gew.-Teilen
Wasser besteht.

Gegenüber üblichen Bekämpfungsmitteln auf Emulsionsbasis, deren Abtötungsrate nach 12 Wochen zwischen 40 und 60 % liegt und die - wenn überhaupt - erst nach 24 Wochen Prüfzeit Abtötungsraten in der Größenordnung von 80 % erreichen, werden mit dem erfindungsgemäßen wäßrigen Bekämpfungsmittel bereits nach 12 Wochen die Prüfbedingungen erfüllt.

Das erfindungsgemäße Mittel ergibt eine deutlich geringere Geruchsbelästigung in der Abtrocknungszeit nach der Verarbeitung. Gleichzeitig ist in dieser Phase das Brandrisiko, das bei fahrlässigem Umgang mit Lötkolben, Schweißgeräten und ähnlichen Gegenständen besteht, erheblich reduziert.

Das konzentrat für ein Mittel gemäß der Erfindung zur Bekämpfung von Holzschädlingen in befallenem Holz auf der Basis wäßriger, pyrethroide haltiger Zusammensetzungen besteht aus

0,05 bis 20 Gew.-Teilen, vorzugsweise

0,1 bis 8 Gew.-Teilen

eines oder mehrerer Pyrethroide,

1,5 bis 50 Gew.-Teilen, vorzugsweise

2,5 bis 35 Gew.-Teilen

eines aromatenfreien Lösungsmittels auf der Basis eines aliphatischen Kohlenwasserstoffs,

1,5 bis 50 Gew.-Teilen, vorzugsweise

2,5 bis 35 Gew.-Teilen

Butyldiglykol und

2,5 bis 50 Gew.-Teilen, vorzugsweise

3,0 bis 40 Gew.-Teilen

eines oder mehrerer nichtionischer Emulgatoren aus der Gruppe

Alkylphenolpolyethylenglykolether,

Carbonsäurepolyethylenglykolester,

Alkylpolyglykolether,

Alkylarylpolyglykolether und

Alkylolamid, sowie

ggf. Wasser.

Vorzugsweise enthält das erfindungsgemäße Mittel oder Konzentrat als aromatenfreies Lösungsmittel ein aromatenfreies Testbenzin.

Gemäß einer weiteren Ausführungsform beträgt im erfindungsgemäßen Mittel oder Konzentrat das Verhältnis Butyldiglykol zum Emulgator 4 : 1 bis 1 : 4, vorzugsweise 1,5 : 1 bis 1 : 2.

Als Pyrethroide werden in dem erfindungsgemäßen Mittel oder Konzentrat Cyano-(4-fluoro-3-phenoxyphenylmethyl-3-(2,2-dichloro-ethenyl)-2,2-dimethylcyclopropancarboxylat (common name: Cyfluthrin), 3-Phenoxybenzyl(+)-cis, trans-3-(2,2-dichlorvinyl)-2,2-dimethylcyclopropancarboxylat, (common name: Permethrin), 2,2-Dimethyl-3-(2,2-dichlorvinyl)-cyclopropancarbonsäure-αcyano-3-phenoxybenzylester (common name: Cypermethrin) oder Pentafluorphenyl-methyl-3-(2,2-dichlorethenyl)-2,2-dimethylcyclopropancarboxylat (common name: Fenfluthrin), allein oder in Mischungen untereinander, eingesetzt.

**Erfindungsgemäßes Beispiel 1:**

| | |
|---|---:|
| 3-Phenoxybenzyl(+)-cis, trans-3-(2,2-dichlorvi-nyl)-2,2-dimethylcyclopropancarboxylat (Permethrin) | 0,25 |
| Testbenzin, aromatenfrei | 2,8 |
| Butyldiglykol | 3,15 |
| Alkylarylpolyglykolether (Emulgator) | 1,3 |
| Carbonsäurepolyglykolester (Emulgator) | 2,5 |
| Wasser | 90 |
| | 100 |

| µg Wirkstoff | | | |
|---|---|---:|---|
| | 1.mm | 1423 | (84,3 %) |
| | 2.mm | 142 | ( 8,4 %) |
| | 3.mm | 77 | ( 4,6 %) |
| | 4.mm | 46 | ( 2,7 %) |

3 mm in % des 1.mm    5,4 %

Abtötungsrate nach 12 Wochen: 81
(RAL-Prüfung)

**Erfindungsgemäßes Beispiel 2:**

Cyano-(4-fluoro-3-phenoxyphenylmethyl-3(2,2-dichloro-
ethenyl)-2,2-dimethylcyclopropancarboxylat
(Cyfluthrin)                                                    0,1

Testbenzin, aromatenfrei                                       2,8

Butyldiglykol                                                  3,3

Alkylarylpolyglykolether (Emulgator)                           1,3

Carbonsäurepolyglykolester (Emulgator                          2,5

Wasser                                                        <u>90</u>

                                                              100

$\mu$g  Wirkstoff        1.mm    1021    (87,3 %)
                         2.mm     108    ( 9,2 %)
                         3.mm      34    ( 2,9 %)
                         4.mm       7    ( 0,6 %)

          3 mm in % des 1.mm              3,3 %

Abtötungsrate nach 12 Wochen:  85
(RAL-Prüfung)

**Vergleichsbeispiel:**

| | |
|---|---:|
| 3-Phenoxybenzyl(+)-cis, trans-3-(2,2-dichlorvinyl)-2,2-dimethylcyclopropancarboxylat (Permethrin) | 0,25 |
| Dibutylphthalat | 1,4 |
| Testbenzin | 3,35 |
| Mischungen von n-Alkylbenzolsulfonat und Alkylpolyglykolether | 5 |
| Wasser | 90 |
| | 100 |

| μg Wirkstoff | 1. mm | 1716 |
|---|---|---|
| | 2. mm | - |
| | 3. mm | 14 |
| | 4. mm | - |

3 mm in % des 1. mm        0,8 %

Abtötungsrate nach 12 Wochen:   62
(RAL-Prüfung)

**Patentansprüche**

1. Mittel zur Bekämpfung von Holzschädlingen in befallenem Holz auf der Basis wäßriger pyrethroidhaltiger Zusammensetzungen, dadurch gekennzeichnet, daß das Mittel aus
   0,05 bis 2 Gew.-Teilen
   eines oder mehrerer Pyrethroide,
   1,5 bis 5 Gew.-Teilen
   eines aromatenfreien Lösungsmittels auf der Basis eines aliphatischen Kohlenwasserstoffs,
   1,5 bis 5 Gew.-Teilen
   Butyldiglykol und
   2,5 bis 5 Gew.-Teilen
   eines oder mehrerer nichtionischer Emulgatoren aus der Gruppe Alkylphenolpolyethylenglykolether, Carbonsäurepolyethylenglykolester, Alkylpolyglykolether, Alkylarylpolyglykolether und Alkylolamid, sowie
   94,45 bis 83 Gew.-Teilen
   Wasser besteht.

2.  Mittel nach Anspruch 1, dadurch gekennzeichnet, daß das Mittel aus

    0,1 bis 0,8 Gew.-Teilen

    eines oder mehrerer Pyrethroide,

    2,5 bis 3,5 Gew.-Teilen

    eines aromatenfreien Lösungsmittels auf der Basis eines aliphatischen Kohlenwasserstoffes,

    2,5 bis 3,5 Gew.-Teilen

    Butyldiglykol und

    3 bis 4 Gew.-Teilen

    eines oder mehrerer nichtionischer Emulgatoren aus der Gruppe Alkylphenolpolyethylenglykolether, Carbonsäurepolyethylenglykolester, Alkylpolyglykolether, Alkylarylpolyglykolether und Alkylolamid, sowie

    91,90 bis 88,2 Gew.-Teilen

    Wasser besteht.

3.  Mittel nach Anspruch 1 oder 2, dadurch gekennzeichnet, daß das aromatenfreie Lösungsmittel ein aromatenfreies Testbenzin ist.

4.  Mittel nach einem der Ansprüche 1 bis 3, dadurch gekennzeichnet, daß das Verhältnis Butyldiglykol zum Emulgator

    4 : 1 bis 1 : 4, vorzugsweise

    1,5 : 1 bis 1 : 2

    beträgt.

5.  Mittel nach einem der Ansprüche 1 bis 4, dadurch gekennzeichnet, daß es als Pyrethroid Cyano-(4-fluoro-3-phenoxyphenylmethyl-3-(2,2-dichloro-ethenyl)-2,2-dimethylcyclopropancarboxylat, 3-Phenoxybenzyl(+)-cis, trans-3-(2,2-dichlorvinyl)-2,2-dimethylcyclopropancarboxylat, 2,2-Dimethyl-3-(2,2-dichlorvinyl)-cyclopropancarbonsäure-α-cyano-3-phenoxybenzylester oder Pentafluorphenyl-methyl-3-(2,2-dichlorethenyl)-2,2-dimethylcyclopropancarboxylat, allein oder in Mischungen untereinander, enthält.

6.  Konzentrat für ein Mittel gemäß einem der Ansprüche 1 bis 5 zur Bekämpfung von Holzschädlingen in befallenem Holz auf der Basis wäßriger pyrethroidhaltiger Zusammensetzungen, dadurch gekennzeichnet, daß das Konzentrat aus

    0,05 bis 20 Gew.-Teilen

    eines oder mehrerer Pyrethroide,

    1,5 bis 50 Gew.-Teilen

    eines aromatenfreien Lösungsmittels auf der Basis eines aliphatischen Kohlenwasserstoffs,

    1,5 bis 50 Gew.-Teilen

    Butyldiglykol und

    2,5 bis 50 Gew.-Teilen

    eines oder mehrerer nichtionischer Emulatoren aus der Gruppe Alkylphenolpolyethylenglykolether, Carbonsäurepolyethylenglykolester, Alkylpolyglykolether, Alkylarylpolyglykolether und Alkylolamid, sowie ggf. Wasser besteht.

7.  Konzentrat nach Anspruch 6, dadurch gekennzeichnet, daß das Konzentrat aus

    0,1 bis 8 Gew.-Teilen

    eines oder mehrerer Pyrethroide,

    2,5 bis 35 Gew.-Teilen

    eines aromatenfreien Lösungsmittels auf der Basis eines aliphatischen Kohlenwasserstoffs,

    2,5 bis 35 Gew.-Teilen

    Butyldiglykol und

    3 bis 40 Gew.-Teilen

    eines oder mehrerer nichtionischer Emulgatoren aus der Gruppe Alkylphenolpolyethylenglykolether, Carbonsäurepolyethylenglykolester, Alkylpolyglykolether, Alkylarylpolyglykolether und Alkylolamid, sowie ggf. Wasser besteht.

8.  Konzentrat nach Anspruch 6 oder 7, dadurch gekennzeichnet, daß das aromatenfreie Lösungsmittel ein aromatenfreies Testbenzin ist.

7

EP 0 537 447 B1

9. Konzentrat nach einem der Ansprüche 6 bis 8, dadurch gekennzeichnet, daß das Verhältnis Butyldiglykol zum Emulgator

4 : 1 bis 1 : 4, vorzugsweise

1,5 : 1 bis 1 : 2

beträgt.

10. Konzentrat nach einem der Ansprüche 6 bis 9, dadurch gekennzeichnet, daß es als Pyrethroid Cyano-(4-fluoro-3-phenoxyphenylmethyl-3-(2,2-dichloro-ethenyl)-2,2-dimethylcyclopropancarboxylat, 3-Phenoxybenzyl(+)-cis, trans-3-(2,2-dichlorvinyl)-2,2-dimethylcyclopropancarboxylat, 2,2-Dimethyl-3-(2,2-dichlorvinyl)-cyclopropancarbonsäure-α-cyano-3-phenoxybenzylester oder Pentafluorphenyl-methyl-3-(2,2-dichlorethenyl)-2,2-dimethylcyclopropancarboxylat, allein oder in Mischungen untereinander, enthält.

Claims

1. An agent for combatting wood vermin in attacked wood, on the basis of aqueous, pyrethroid-containing compositions, characterised in that the agent consists of

0.05 to 2 parts by weight

of one or more pyrethroids,

1.5 to 5 parts by weight

of an aromatic-free solvent on the basis of an aliphatic hydrocarbon,

1.5 to 5 parts by weight

butyl diglycol and

2.5 to 5 parts by weight

of one or more non-ionic emulsifiers from the group alkyl phenol polyethylene glycol ether, carboxylic acid polyethylene glycol ester, alkyl polyglycol ether, alkyl aryl polyglycol ether and alkylolamide, and

94.45 to 83 parts by weight

water.

2. An agent according to Claim 1, characterised in that the agent consists of

0.1 to 0.8 parts by weight

of one or more pyrethroids,

2.5 to 3.5 parts by weight

of an aromatic-free solvent on the basis of an aliphatic hydrocarbon,

2.5 to 3.5 parts by weight

butyl diglycol and

3 to 4 parts by weight

of one or more non-ionic emulsifiers from the group alkyl phenol polyethylene glycol ether, carboxylic acid polyethylene glycol ester, alkyl polyglycol ether, alkyl aryl polyglycol ether and alkylolamide, and

91.90 to 88.2 parts by weight

water.

3. An agent according to Claim 1 or 2, characterised in that the aromatic-free solvent is an aromatic-free white spirit.

4. An agent according to one of Claims 1 to 3, characterised in that the ratio of butyl diglycol to emulsifier is

4 : 1 to 1 : 4, preferably

1.5 : 1 to 1 : 2.

5. An agent according to one of Claims 1 to 4, characterised in that it contains as pyrethroid cyano-(4-fluoro-3-phenoxyphenylmethyl-3-(2,2-dichloroethenyl)-2,2-dimethylcyclopropane carboxylate, 3-phenoxybenzyl(+)-cis,trans-3-(2,2-dichlorovinyl)-2,2-dimethylcyclopropane carboxylate, 2,2-dimethyl-3-(2,2-dichlorovinyl)-cyclopropane carboxylic acid-α-cyano-3-phenoxybenzyl ester or pentafluorophenylmethyl-3-(2,2-dichloroethenyl)-2,2-dimethylcyclopropane carboxylate, alone or in mixtures with each other.

8

6. A concentrate for an agent according to one of Claims 1 to 5 for combatting wood vermin in attacked wood, on the basis of agueous, pyrethroid-containing compositions, characterised in that the concentrate consists of

0.05 to 20 parts by weight

of one or more pyrethroids,

1.5 to 50 parts by weight

of an aromatic-free solvent on the basis of an aliphatic hydrocarbon,

1.5 to 50 parts by weight

butyl diglycol and

2.5 to 50 parts by weight

of one or more non-ionic emulsifiers from the group alkyl phenol polyethylene glycol ether, carboxylic acid polyethylene glycol ester, alkyl polyglycol ether, alkyl aryl polyglycol ether and alkylolamide, and optionally water.

7. A concentrate according to Claim 6, characterised in that the concentrate consists of

0.1 to 8 parts by weight

of one or more pyrethroids,

2.5 to 35 parts by weight

of an aromatic-free solvent on the basis of an aliphatic hydrocarbon,

2.5 to 35 parts by weight

butyl diglycol and

3 to 40 parts by weight

of one or more non-ionic emulsifiers from the group alkyl phenol polyethylene glycol ether, carboxylic acid polyethylene glycol ester, alkyl polyglycol ether, alkyl aryl polyglycol ether and alkylolamide, and optionally water.

8. A concentrate according to Claim 6 or 7, characterised in that the aromatic-free solvent is an aromatic-free white spirit.

9. A concentrate according to one of Claims 6 to 8, characterised in that the ratio of butyl diglycol to emulsifier is

4 : 1 to 1 : 4, preferably

1.5 : 1 to 1 : 2.

10. A concentrate according to one of Claims 6 to 9, characterised in that it contains as pyrethroid cyano-(4-fluoro-3-phenoxyphenylmethyl-3-(2,2-dichloroethenyl)-2,2-dimethylcyclopropane carboxylate, 3-phenoxybenzyl( + )-cis,trans-3-(2,2-dichlorovinyl)-2,2-dimethylcyclopropane carboxylate, 2,2-dimethyl-3-(2,2-dichlorovinyl)-cyclopropane carboxylic acid-$\alpha$-cyano-3-phenoxybenzyl ester or pentafluorophenylmethyl-3-(2,2-dichloroethenyl)-2,2-dimethylcyclopropane carboxylate, alone or in mixtures with each other.

## Revendications

1. Agent pour la lutte contre les parasites du bois dans du bois d'abattage, à base de compositions aqueuses contenant des pyréthroïdes, caractérisé en ce que l'agent est constitué de

0,05 à 2 parties en poids,

d'un ou plusieurs pyréthroïde(s), de

1,5 à 5 parties en poids,

d'un solvant exempt d'aromatiques à base d'un hydrocarbure aliphatique, de

1,5 à 5 parties en poids,

de butyl-diglycol, et de

2,5 à 5 parties en poids,

d'un ou plusieurs émulsifiant(s) non-ionique(s) du groupe alkylphénolpolyéthylèneglycoléther, polyéthy-lèneglycolester d'acide carboxylique, alkylpolyglycoléther, alkylarylpolyglycoléther et alkylolamide, ainsi que de

94,45 à 83 parties en poids, d'eau.

EP 0 537 447 B1

2. Agent selon la revendication 1, caractérisé en ce que l'agent est constitué de
0,1 à 0,8 parties en poids
d'un ou plusieurs pyréthroïde(s), de
2,5 à 3,5 parties en poids
d'un solvant exempt d'aromatiques à base d'un hydrocarbure aliphatique, de
2,5 à 3,5 parties en poids
de butyl-diglycol, et de
3 à 4 parties en poids
d'un ou plusieurs émulsifiant(s) non-ionique(s) du groupe alkylphénolpolyéthylèneglycoléther, polyéthy-lèneglycolester d'acide carboxylique, alkylpolyglycoléther, alkylarylpolyglycoléther et alkylolamide, ainsi que de
91,90 à 88,2 parties en poids d'eau.

3. Agent selon la revendication 1 ou 2, caractérisé en ce que le solvant exempt d'aromatiques est un white-spirit exempt d'aromatiques.

4. Agent selon l'une des revendications 1 à 3, caractérisé en ce que le rapport du butyl-diglycol à l'émulsifiant vaut
de 4 : 1 à 1 : 4, de préférence
de 1,5: 1 à 1 : 2.

5. Agent selon l'une des revendications 1 à 4, caractérisé en ce que, comme pyréthroïde, il contient du cyano-(4-fluoro-3-phénoxyphénylméthyl-3-(2,2-dichloro-éthényl)-2,2-diméthylcyclopropanecarboxylate, du 3-phénoxy-benzyl(+)-cis, trans-3-(2,2,dichlorovinyl)-2,2- diméthylcyclopropanecarboxylate, du $\alpha$-cyano-3-phénoxybenzylester d'acide 2,2-diméthyl-3-(2,2-dichlorovinyl)-cyclopropane-carboxylique ou du pentafluorophényl-méthyl-3-(2,2-dichloroéthényl)-2,2-diméthylcyclopropanecarboxylate, seuls ou mélangés entre eux.

6. Concentré pour un agent selon l'une des revendications 1 à 5 pour lutter contre des parasites du bois dans du bois d'abattage, à base de compositions aqueuses contenant des pyréthroïdes, caractérisé en ce que le concentré est constitué de
0,05 à 20 parties en poids,
d'un ou plusieurs pyréthroïde(s), de
1,5 à 50 parties en poids,
d'un solvant exempt d'aromatiques à base d'un hydrocarbure aliphatique, de
1,5 à 50 parties en poids,
de butyl-diglycol, et de
2,5 à 50 parties en poids,
d'un ou plusieurs émulsifiant(s) non-ionique(s) du groupe alkylphénolpolyéthylèneglycoléther, polyéthy-lèneglycolester d'acide carboxylique, alkylpolyglycoléther, alkylarylpolyglycoléther et alkylolamide, ainsi que d'eau le cas échéant.

7. Concentré selon la revendication 6, caractérisé en ce le concentré en ce le concentré est constitué
0,1 à 8 parties en poids
d'un ou plusieurs pyréthroïde(s), de
2,5 à 35 parties en poids
d'un solvant exempt d'aromatiques à base d'un hydrocarbure aliphatique, de
2,5 à 35 parties en poids de butyl-diglycol, et de
3,0 à 40 parties en poids
d'un ou plusieurs émulsifiant(s) non-ionique(s) du groupe alkylphénolpolyéthylèneglycoléther, polyéthy-lèneglycolester d'acide carboxylique, alkylpolyglycoléther, alkylarylpolyglycoléther et alkylolamide, ainsi que d'eau le cas échéant.

8. Concentré selon la revendication 6 ou 7, caractérisé en ce que le solvant exempt d'aromatiques est un white-spirit exempt d'aromatiques.

9. Concentré selon l'une des revendications 6 à 8, caractérisé en ce que le rapport du butyl-diglycol à l'émulsifiant vaut

10

de 4 : 1 à 1 : 4, de préférence
de 1,5: 1 à 1 : 2.

10. Concentré selon l'une des revendications 6 à 9, caractérisé en ce que, comme pyréthroïde, il contient du cyano-(4-fluoro-3-phénoxyphénylméthyl-3-(2,2-dichloro-éthényl)-2,2-diméthylcyclopropanecarboxylate, du 3-phénoxy-benzyl(+)-cis, trans-3-(2,2,dichlorovinyl)-2,2- diméthylcyclopropanecarboxylate, du α-cyano-3-phénoxybenzylester d'acide 2,2-diméthyl-36(2,2-dichlorovinyl)-cyclopropane-carboxylique ou du pentafluorophényl-méthyl-3-(2,2-dichloroéthényl)-2,2-diméthylcyclopropanecarboxylate, seuls ou mélangés entre eux.